# EUROPEAN PATENT APPLICATION

(11) **EP 1 566 596 A1**
(43) Date of publication of application: **24.08.2005**
(21) Application number: 04075432.7
(22) Date of filing: 11.02.2004
(51) Int. Cl.: F24D 3/14

(54) **Apparatus for connecting a heating tube to a grid part wire with the aid of a plastically deformable wire part, and use of such an apparatus for the purpose of installing a floor heating**

(71) Applicant: V.o.f. Van Lieshout, 5462 GH Veghel (NL)
(72) Inventor: Van Lieshout, Hendrikus, Jozephus, Maria, 5472 PL Loosbroek (NL)
(74) Representative: Prins, Adrianus Willem

(57) **Abstract**

An apparatus for connecting a duct with a grid part with the aid of a plastically deformable wire part, for instance for the purpose of installing a floor heating, the apparatus comprising:
- a feed mechanism for feeding a wire part to a processing position;
- winding means arranged for winding a wire part situated in the processing position around the grid part and the duct; and
- driving means for at least driving the winding means,
wherein the winding means comprise bending means for bending a wire part, from the processing position, a single time at least substantially completely around the grid part and the duct.

## Description

This invention relates to an apparatus for connecting a duct to a grid part with the aid of a plastically deformable wire part, for instance for the purpose of installing a floor heating, the apparatus comprising:
- a feed mechanism for feeding a wire part to a processing position;
- winding means arranged for winding a wire part situated in the processing position around the grid part and the duct; and
- driving means for at least driving the winding means.

Such an apparatus is known per se and commercially available. The known apparatus finds application in the installation of a floor heating. A floor heating typically comprises a duct designed as a flexible tube, through which heated water can be passed. This tube is included in the floor, thereby to heat the floor and hence the environment located above the floor. Incidentally, it is also possible to have relatively cold water flow through the tube, thereby, if desired, to cool the floor and hence the environment. Before a top layer of a floor is fitted, the tube is spread out in a favorable pattern over an intermediate floor part and connected with a grid, typically manufactured from steel, or a mat manufactured from steel. As a result, the tube cannot move or float upwards when, for instance, a concrete mortar is poured out over the intermediate floor part for the purpose of fitting a top layer of the floor in which the heating tube is included. The grid or the mat can be disposed flat against a surface of the intermediate floor part but may also be arranged slightly raised with respect to the surface. In the following, the steel mat or the grid is referred to by the word "grid" or the word "grid part".

For binding the heating tube to a grid part, a person can manually, typically sitting on his knees, wind a metal wire around the heating tube and the desired grid part. As such, this is a very time-consuming and laborious job. In a worker, this activity may lead to health complaints about, for instance, the back and knees. With the aid of a known apparatus, it is possible in a somewhat less manual manner to wind a metal wire about both the heating tube and a grid part. Incidentally, it is then still necessary for the worker to sit on his knees or squat on his haunches, with all its consequences. Use is made of a relatively thin metal wire of a thickness of about 0.8 mm. The wire part to be wound about the heating tube and the grid part typically has a length of about 70 cm. The known apparatus runs on batteries. To enable the metal wire to be wound around the heating tube and the grid part with relatively little energy consumption, use is made of an annealed wire, which is relatively expensive.

The object of the invention is to provide an apparatus according to the preamble of claim 1, which meets at least one of the above-mentioned disadvantages while maintaining as many advantages as possible of the known apparatus.

The object of the invention is achieved with an apparatus according to the invention, which is characterized in that the winding means comprise bending means for bending a wire part from the processing position a single time at least substantially completely around the grid part and the duct. The advantage of the apparatus according to the invention is that a much shorter wire part can be used for binding the duct to a grid part. Thus, it is possible for the wire part to have only a length of about 8 cm. This much shorter length of the wire part to be used for a connection is possible in that the winding means comprise bending means. As a consequence of this, a relatively thick wire part can be used for the connection. Such a thick wire part, upon being bent, forms a sufficiently strong and possibly tight "ring" fitted around the grid part and the duct, so that the grid part and the duct are connected with each other sufficiently strongly. This is an entirely different form of binding a duct to a grid part than the form that is possible with the known apparatus, whereby the connection is realized after a multiplicity of windings and typically twisting the loose ends of the wound wire part around one another. Although a wire part for connecting a heating tube with a grid part with the aid of an apparatus according to the invention must be thicker than a wire part that is used with the known apparatus, eventually much less metal is used up for connecting a heating tube with a grid part using an apparatus according to the invention. Thus, the thickness of a wire part that is used with an apparatus according to the invention may be approximately twice as great compared with a wire part that is used for binding with the aid of the known apparatus. Since the length of a wire part that can be used with the apparatus according to the invention is approximately eight times smaller than the length of a wire part that is to be used with the known apparatus, a heating tube is connected to a grid part with an apparatus according to the invention using only about 50% of the amount of metal that is used for binding with a known apparatus. Moreover, the wire parts that can be used for binding with the apparatus according to the invention do not need to be annealed. As a consequence, the wire parts that can be used for binding with an apparatus according to the invention can be much cheaper than the wire parts that are to be used for binding with a known apparatus, for two reasons, since the wire parts to be fitted with an apparatus according to the invention are shorter and do not need to be annealed.

In a particular embodiment, it holds that the driving means are further arranged for driving the feed mechanism. This provides the advantage that the apparatus can bind a heating tube to a grid part relatively fast.

It may further hold that the apparatus is provided with a cutter for cutting off wire parts from a stock of continuous wire parts. This provides the advantage that wire parts can be passed by the feed mechanism in the direction of the processing position in continuous condition. With the aid of the cutter, a wire part can be cut off from the amount of continuous wire parts.

Preferably, it holds that the driving means are further arranged for driving a cutter. As a result, a user of the apparatus only needs to operate a single drive to have the bending means execute the bending of a wire part around the grid part and the heating tube, and optionally to have the feed mechanism feed wire parts.

A particular embodiment is characterized in that the apparatus is further provided with displacing means for displacing a grid part, and optionally a flexible tube to be connected with the grid part, in the direction of the apparatus. This makes it possible for a grid part initially situated against a surface to be moved away from the surface, so that a wire part can be bent around a grid part and a heating tube. In the use of the above-described known apparatus, a user must pick up the grid part and the duct by hand, which is laborious and entails an unfavorable attitude for the user.

Preferably, it holds that the driving means are provided with a transmission, such that, in use, upon a driving stroke of the driving means, the feed mechanism and the bending means are operated. This provides the advantage that the operation of the feed mechanism and the operation of the bending means can be tuned to each other.

Also, it may hold that the transmission is such that upon a driving stroke of the driving means, also the cutter is operated. This provides the advantage that the operation of the feed mechanism, the operation of the cutter and the operation of the bending means can be tuned to each other. It is therefore possible that first the feed mechanism passes a wire part to the processing position, that subsequently the cutter separates this wire part from a continuous amount of wire parts, and that after that the bending means bend the separated wire part about the grid part and the heating tube.

It is also possible that the transmission is such that upon a driving stroke of the driving means, also the displacing means are operated. In this case, prior to feeding, cutting and bending a wire part, first a desired grid part, optionally with a heating tube, can be lifted up from a surface or be further removed from a surface, so that space is obtained for bending the respective wire part around the grid part and the heating tube.

Preferably, it holds that the driving means can be operated manually. As a consequence, a user of the apparatus can obtain a proper control over the operation of the apparatus.

Furthermore, it preferably holds that the driving means are of mechanical design. This means that with the aid of a user's efforts, the driving means, and hence possibly the entire apparatus, can be operated. There is no electrical line needed for connection to an electrical current source and no batteries are needed. In other words, the apparatus is also safe and environment-friendly. Nor does the apparatus need to be driven pneumatically or hydraulically.

The apparatus may be provided with a stock of wire parts. These wire parts can be included in the apparatus as loose wire parts. However, it preferably holds that the apparatus is provided with a reel around which, in use, the stock of plastically deformable wire part is stored so that it can be unwound therefrom. In this case, the wire parts are stored in continuous form.

Preferably, it holds that the apparatus is provided with a housing with a recess in which, in use, the duct and the grid part can be received for the purpose of bending a wire part around the duct and the grid part. This provides the advantage that the apparatus can be designed such that movable parts and/or relatively fragile parts of the apparatus may be situated within the housing, and can also remain within the housing as much as possible during the operation of the apparatus. As a consequence, the apparatus can be made of very robust design.

Preferably, it holds furthermore that the apparatus may be provided with a spring for having the driving means, after a driving stroke, return to a rest condition. This provides the advantage that a user only needs to make an effort for the purpose of achieving a driving stroke. When the user has reached an extreme position of the driving stroke against the spring force, the apparatus, by virtue of the spring force, will return of itself to the rest condition.

Preferably, it holds that the feed mechanism is provided with a freewheel clutch, so that when the driving means are allowed to return to the rest condition, wire parts which have been fed in the direction of the processing position with the aid of the last driving stroke maintain a position assumed during the driving stroke.

Furthermore, it holds that the apparatus is preferably provided with at least one supporting part with the aid of which the apparatus can be supported against a nearby surface when the driving means are being driven. This renders the use of the apparatus relatively easy, especially when the driving means are to be operated manually against a spring force.

In particular, it holds that the at least one supporting part is so designed that, in use, near the supporting parts and between the nearby surface and the apparatus, space is available for connecting a duct with the respective grid part with the aid of the apparatus. This can prevent, for instance, the bending means scraping or butting against a nearby surface during the bending of a wire part around the heating tube and the grid part.

The invention further relates to the use of such an apparatus for binding a heating duct to a grid part for the purpose of installing a floor heating.

The invention will presently be elucidated with reference to a drawing. In the drawing:
Fig. 1 shows a first embodiment of an apparatus according to the invention;
Fig. 2 shows a view of the embodiment shown in Fig. 1, looking in the direction of arrow A;
Fig. 3 schematically shows a part of an apparatus according to the invention;
Fig. 4 schematically shows a part of an apparatus according to the invention;
Fig. 5 schematically shows a part of an apparatus according to the invention;
Fig. 6 schematically shows a part of an apparatus according to the invention;
Fig. 7 schematically shows a part of an apparatus according to the invention;
Fig. 8 schematically shows a part of an apparatus according to the invention;
Fig. 9 schematically shows a part of an apparatus according to the invention.

Like parts have been provided with the same reference numerals.

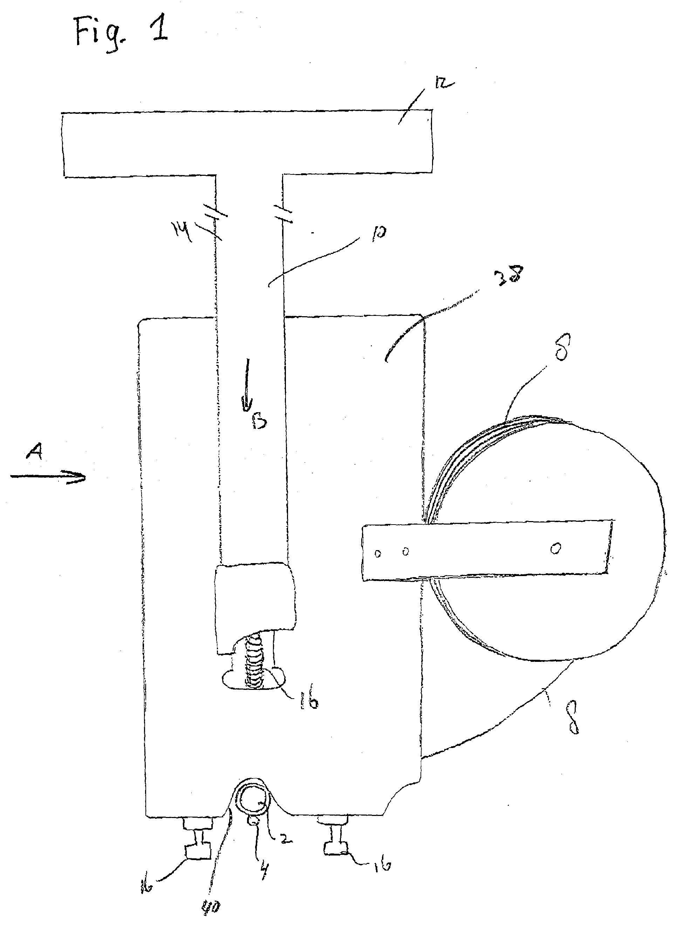

Fig. 1 shows an apparatus 1 for connecting a duct designed as a flexible tube 2 to a grid part 4 with the aid of a plastically deformable wire part. In Fig. 1 the flexible tube 2 and the grid part 4 are each shown in cross section. Apparatus 1 can for instance be used for the purpose of installing a floor heating. In that case, the grid part 4 is a part of a steel mat which extends over an intermediate layer of a floor to be formed. In that case, the flexible tube 2 is a tube through which a liquid can flow for heating, or for cooling, a floor part in which the tube is included.

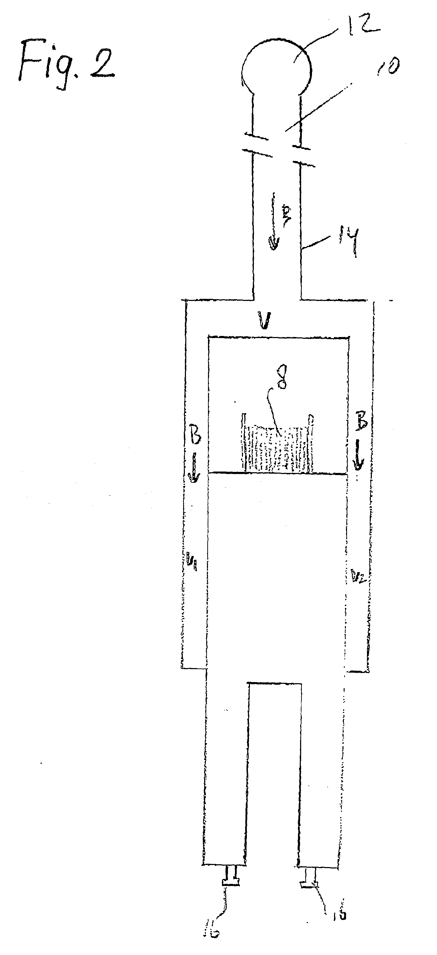

Fig. 2 shows a view of the apparatus 1, looking in the direction of arrow A as shown in Fig. 1. In both Fig. 1 and Fig. 2, a reel 6 is visible, around which, in use, a stock of plastically deformable wire part 8 is stored so as to be unwindable. Inter alia with the aid of a feed mechanism, not further shown in Figs. 1 and 2, for feeding a wire part to a processing position, a wire part can be fitted around the flexible tube 2 and the grid part 4, such that the flexible tube 2 is bound to the grid part 4. To that end, apparatus 1 is provided with winding means, not shown either in Figs. 1 and 2, which are arranged for winding a wire part situated in the processing position around the grid part and the flexible tube. This will be further discussed later on.

Furthermore, the apparatus 1 is provided with driving means 10 for at least driving the winding means. In the embodiment of an apparatus according to the invention shown in Figs. 1 and 2, it holds that the driving means comprise a handgrip 12 and a driving rod 14. The driving rod preferably extends such that when the apparatus, with the aid of supporting parts 16, rests on a substantially horizontally extending surface, it is normally situated at the level of a hip of the user who holds the apparatus with his hands. With the aid of the apparatus 1, the driving means can in that case be simply operated manually. The height of the grip can be adjustable.

Preferably, the driving means are of mechanical design. In that case, a user can operate the driving means, for instance by pressing the handgrip 12 down. In this case, it is also possible that a user leans slightly on the handgrip 12, so that the user's body weight can contribute to the application of a force on the handgrip 12. It is also possible, however, that the apparatus is designed to be so lightly operable that the driving means are manually operated through a simple manually applicable downward pressure on the handgrip 12. In any case, such a manner of operation of the driving means is simply executable by a user without this being harmful to the user's health. Through a downward movement in the direction of arrow B of the driving means 10, a driving stroke can be effected. Apparatus 1 is preferably provided with a spring 16 for allowing the driving means 10 to return to a rest condition after a driving stroke. The manner in which the driving means drive the apparatus further is set out hereinafter.

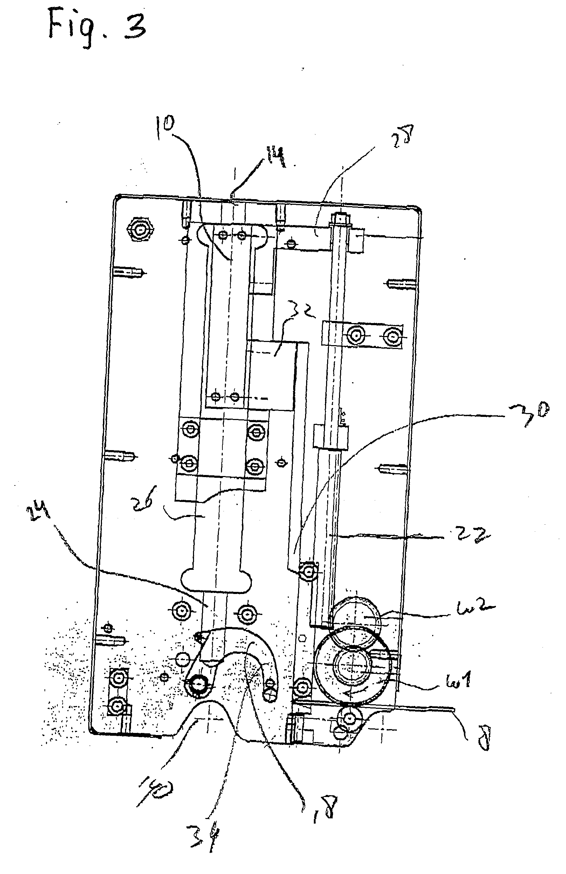

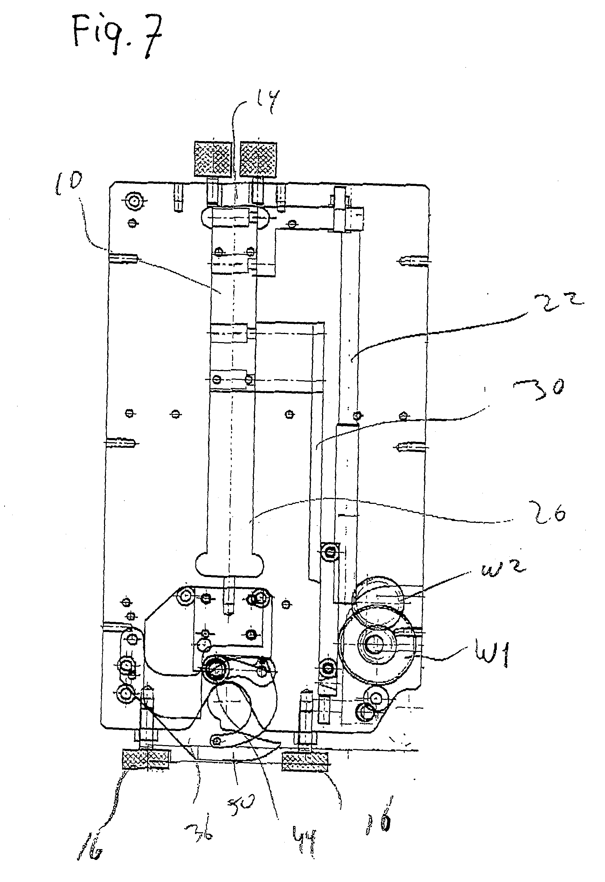

As shown in Fig. 2, the driving rod 14 can be designed as a fork. Between the legs V1 and V2 of the fork V, the winding means are included. These winding means are further shown in Figs. 3-7, each presenting a view of an at least partly opened housing as shown in Fig. 1. To enhance clarity, not all parts are represented in each Figure.

Fig. 3 shows the winding means. These winding means comprise bending means 18 for bending a wire part 20, from a processing position, a single time at least substantially completely around the grid part 4 and the flexible tube 2. The bending means 18 and the processing position will be further discussed hereinafter.

As shown in Figs. 1 and 2, the apparatus preferably comprises a stock of wire parts 8. The feed mechanism preferably comprises at least one circumferential surface against which, at least during feeding, a wire part is situated, being clamped, and which, with the aid of the driving means, is movable in the circumferential direction of the circumferential surface. In Figs. 3, 7 and 8, it is shown that the circumferential surface can comprise a part of a first driving wheel W1. The first driving wheel is driven by a second driving wheel W2, for instance with the aid of gear wheel transmission. The second driving wheel W2 can be driven by a driving rod 22. The driving rod 22 is part of the driving means 10. The driving means are provided with a transmission such that, in use, upon a driving stroke of the driving means, the feed mechanism and the bending means are operated. In the apparatuses shown, this transmission is formed by a first connection 26 between a driving rod 14 and driving rod 23 and a second connection 28 between driving rod 14 and driving rod 22.

The apparatus is preferably provided with a cutter for cutting off wire parts 20 from a stock of continuous wire parts 8. Preferably, it holds that the driving means 10 are further arranged for driving the cutter. In the example shown in the Figures, the cutter comprises a knife 30 for separating a wire part 20 from a stock of wire parts 8. The earlier-mentioned transmission is preferably such that, upon a driving stroke of the driving means, also the cutter, the knife 30, is operated. To this end, the knife 30 is connected with the driving means 10 through a third connection 32.

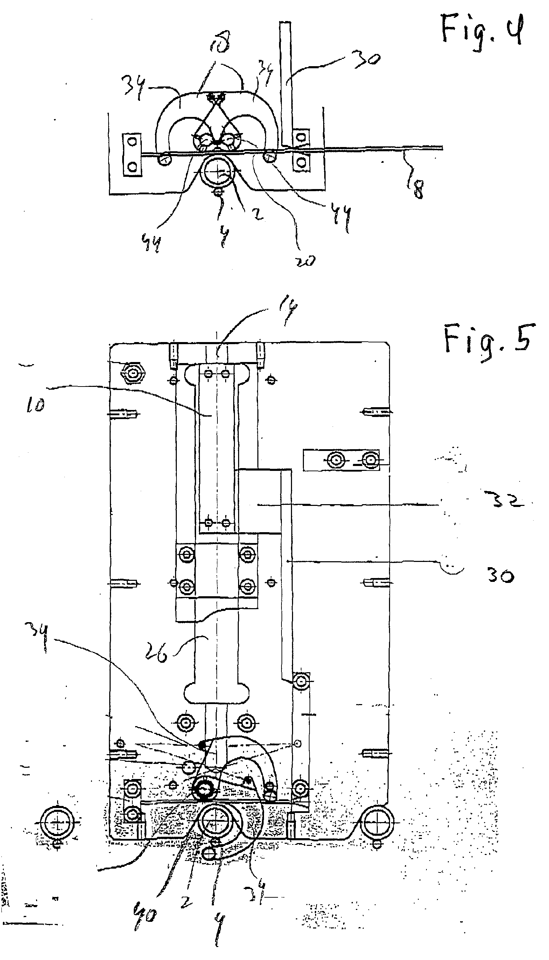

The bending means 18 are preferably designed such that, in use, in a driving stroke, at least against each end of a wire part 20 such a force is applied that the ends of the respective wire part 20 cross each other a single time. A ring fabricated from wire part 20 is thereby fitted relatively tightly around the flexible tube 2 and the grid part 4. The bending means 18 are provided with at least one substantially curved arm 34. It is possible that, for instance, one end of wire part 20 is clamped and that a substantially curved arm 34 rotates about an axis to enable bending of the wire part 20. Preferably, however, two substantially curved arms 34 are involved. Each of these arms is then rotatable about an axis 44 to enable the wire part 20 to be bent. All this is shown in more detail in Fig. 4 and Fig. 5.

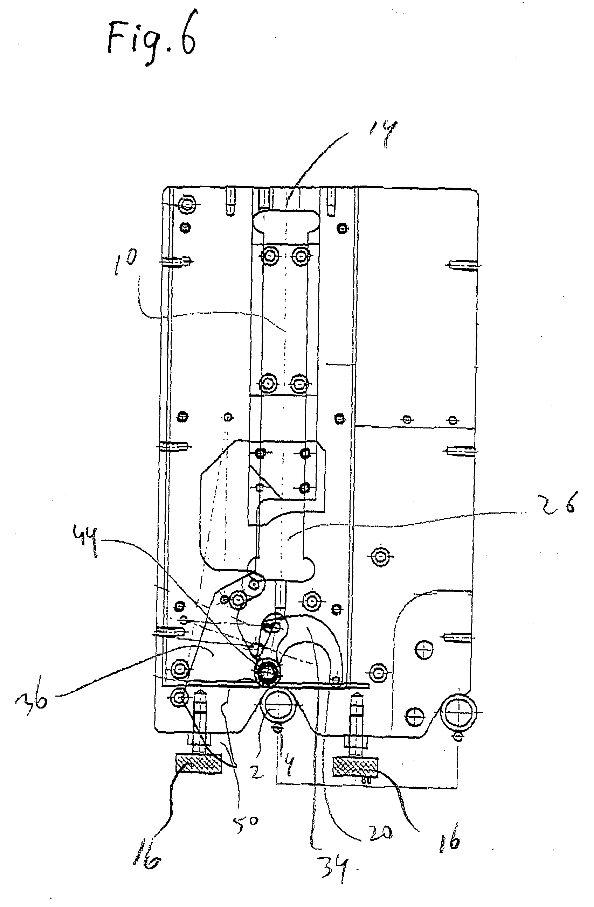

It is furthermore possible that the apparatus is further provided with displacing means 36 for displacing a grid part 4, and optionally a flexible tube 2 to be connected with the grid part 2, in the direction of the apparatus 1. Such displacing means are shown in Figs. 5 and 6. The displacing means 36 can comprise pickup means for displacing the grid part 4, and optionally a flexible tube 2 to be connected with the grid part 4, towards the apparatus. The pickup means can comprise a pickup member 50 situated on two sides of the apparatus. This pickup member can be shaped such that the grid part can be lifted. To that end, the pickup member can be provided, for instance, with a sharp edge to enable it to slide under the cylinder-shaped grid part. Preferably, it holds that the earlier-mentioned transmission is such that upon a driving stroke of the driving means 10, also the displacing means 36 are operated.

As observed earlier, the apparatus can comprise supporting parts 16 with the aid of which the apparatus 1 can be supported against a nearby surface (not shown) when the driving means are being driven. The at least one supporting part can be designed such that, in use, near the supporting parts 16 and between the nearby surface and the apparatus 1, space is available for binding a flexible tube to the respective grid part 4 by bending a wire part 20 around the flexible tube and the grid part.

It is possible that the apparatus is provided with a housing 38 and a recess 40 in which, in use, the flexible tube 2 and the grid part 4 can be received for the purpose of enabling a wire part 20 to be bent around the flexible tube 2 and the grid part 4.

The use and the operation of the apparatus are as follows. The apparatus is preferably placed over a grid part 4 and a heating tube 2 to be connected therewith, in such a manner that the grid part 4 and the heating tube 2 can be connected with each other with the aid of the apparatus. Preferably, it holds that the heating tube 2 and the grid part 4 in that case are received in the recess 40. For a user, the apparatus is simply placeable over the grid part 4 and the heating tube 2 with the aid of handgrips 12. The heating tube 2 will have been placed beforehand over the steel mat, or grid parts 4. When the apparatus has been positioned with respect to the grid part 4 and the heating tube 2 as shown, for instance, in Fig. 1, the driving means 10 can be manually operated by pressing the handgrip 12 downwards, so that driving rod 14 is moved in the direction of arrow B. The apparatus 1 is then supported on the supporting means 16 so that the housing 38 is not moved down as well. The spring 16 is compressed during the downward movement of the driving means 10. With the aid of the second connection 28, the driving rod 22 is moved downwards and with the aid of driving wheel W2 driving wheel W1 is rotated such that the feed mechanism moves the wire part 8 to the processing position. In Fig. 4, a wire part 20 is shown at the processing position. Once this wire part is situated at the processing position, the knife 30 is moved down by the driving means with the aid of the third connection 32 to separate wire part 20 from the stock of continuous wire parts 8. This is shown in more detail in Fig. 4. Next, the driving rod 24 causes the curved arms 34 to rotate each about an axis 44. The wire part 20 is thereby bent around the heating tube 2 and the grid part 4, so that these are connected with each other. After this, the driving means have come to the end of the driving stroke and the driving means, by virtue of the spring 16, will of themselves return to the initial condition, which is seen as a rest condition in this exposition. Optionally, the apparatus is provided with a stop or a shock damper, so that a user knows that the end of the driving stroke has been reached and the grips do not need to be pressed down anymore. Upon removal of the pressure on the grips, the driving means spring back to the initial position.

Preferably, the feed mechanism is provided with a freewheel clutch, known per se, so that when the driving means are allowed to return to the rest condition, wire parts which have been fed in the direction of the processing position with the aid of the last driving stroke retain their assumed position. It will be clear that the driving means and the transmission are so designed that first a wire part 20 is moved to the processing position and that when a predetermined length of the wire part 20 is situated at the processing position, the knife 30 arrives at a cutting position to separate the wire part 20 from the stock of continuous wire parts 8. Further, the apparatus will be so designed that the driving means only allow the bending means to execute a bending movement when the wire part 20 has been separated from the stock of wire parts 8. It is possible that the knife already begins to move when the driving mechanism is moving. The movements can start simultaneously, the apparatus being so dimensioned that the knife does not arrive at a cutting position until the wire part to be cut off is situated at the processing position. It is also possible, however, that the knife starts to move later than the feed mechanism. The designer has freedom in this regard.

The further embodiment of an apparatus according to the invention shown in Figs. 5 and 6 works analogously to the above-discussed embodiment. However, an additional step is carried out prior to, or simultaneously with, the steps already discussed. The driving means will first drive the displacing means so that the pickup means move the heating tube 2 and the grid part 4 towards the apparatus, preferably into the recess 40. Once the flexible tube 2 and the grid part 4 have been received in the recess 40, and the wire part 20 has been separated from the stock of wire parts 8, the bending means 18 will bend the wire part 20 around the flexible tube and the grid part 4.

The feeding of wire part 20 and the cutting thereof can take place simultaneously with the drive of the displacing means.

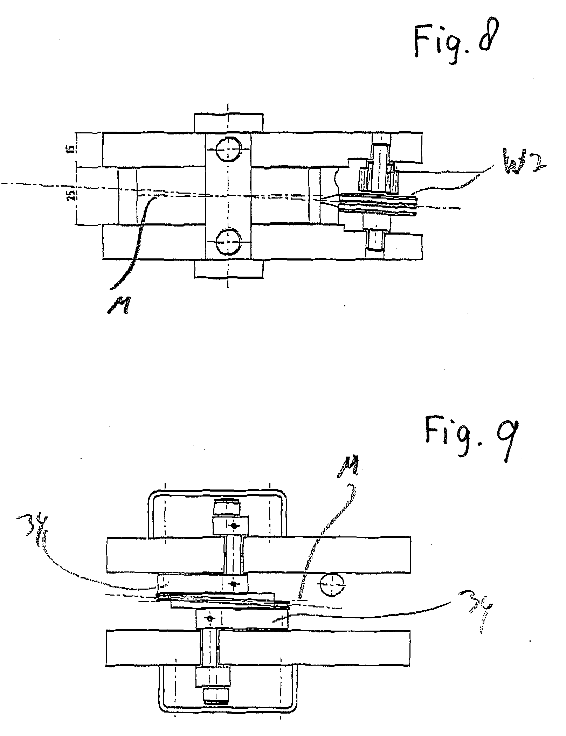

In Fig. 8, a preferred orientation of the driving wheel W2 is shown. Figs. 8 and 9 show a view of a part of the apparatus, looking in a direction which is parallel to the arrow B shown in Fig. 1. This driving wheel W2 is oriented at a slight inclination relative to a centerline M of the apparatus. As a result, the wire part 20 comes to lie in the processing position at a slight inclination relative to a centerline M of the apparatus as shown in Fig. 9. However, this provides the advantage that the ends of wire part 20, when the wire part 20 is being bent around the grid part 4 and the flexible tube 2, can easily cross each other.

It is noted that the at least one supporting part 16 is preferably designed to be adjustable, such that a distance between the apparatus and the nearby surface on which the apparatus rests in use, is adjustable. Furthermore, it may hold that the at least one supporting part is provided with a shock damper to prevent damage of the apparatus and of the surface on which the apparatus rests.

Many variants and/or further modifications of the above-discussed apparatus are conceivable. Thus, instead of a fork-shaped driving rod, a single driving rod can be used. The displacing means, that is, the maximum and minimum range of the pickup means, may be of adjustable design. Also the length of a wire part to be fitted around the flexible tube and the grid part can be designed to be adjustable. Furthermore, the bending means may be adjustable, for instance the distance between the axes 44. To effect a ready return to the rest or initial condition, various spring mechanisms may be included in the apparatus. Ends of the curved arms with which the wire part 20 is operatively bent over from the processing position are preferably provided with small wheels having a slotted profile in which the wire part 20 fits. This prevents wear and damage of wire part and apparatus. Thus, the driving wheel W1 may also be provided with a slotted profile in which the wire parts 8 are received. The wire parts 8 are preferably of a galvanized steel type.

To allow the bending means after a bending movement to return to an initial condition, the bending means may optionally be connected with a spring. For the same reason, the displacing means may also be connected with a spring. However, a lever or hook construction may also be used to ensure that the bending and/or displacing means return to an initial position after bending a wire part and displacing a grid part with duct, respectively.

It is simple for a skilled person to make the appliance of such design that a duct that does not lie parallel to a respective grid part can also be connected to that grid part with the aid of the apparatus, possibly with the aid of two wire parts which are fitted crosswise over the grid part to be connected by providing a connection twice.

Although in the example discussed a flexible tube has been described, the apparatus is also suitable for binding a pipe, for instance of copper, a flexible or inflexible line or duct for passing an electrical current or heating. Thus, aluminum ducts provided with a plastic sheathing are used for installing a floor heating. Nor is it inconceivable that the apparatus is used for the purpose of connecting a grid part and a duct each situated in a wall or ceiling.

Such modifications and/or variants are all understood to belong to the invention.

## Claims

1. An apparatus for connecting a duct with a grid part with the aid of a plastically deformable wire part, for instance for the purpose of installing a floor heating, the apparatus comprising:
• a feed mechanism for feeding a wire part to a processing position;
• winding means arranged for winding a wire part situated in the processing position around the grid part and the duct; and
• driving means for at least driving the winding means,
**characterized in that** the winding means comprise bending means for bending a wire part, from the processing position, a single time at least substantially completely around the grid part and the duct.

2. An apparatus according to claim 1, **characterized in that** the bending means, in use, upon a driving stroke, apply such a force at least against each end of a wire part, that the ends of the respective wire part cross each other a single time.

3. An apparatus according to claim 1 or 2, **characterized in that** the bending means are provided with at least one substantially curved arm, each arm being rotatable about an axis for the purpose of enabling a wire part to be bent.

4. An apparatus according to claim 1, 2 or 3, **characterized in that** the driving means are further arranged for driving the feed mechanism.

5. An apparatus according to any one of the preceding claims, **characterized in that** the apparatus is provided with a cutter for cutting off wire parts from a stock of continuous wire parts.

6. An apparatus according to claim 5, **characterized in that** the driving means are further arranged for driving the cutter.

7. An apparatus according to claim 5 or 6, **characterized in that** the cutter comprises a knife for separating a wire part from a stock of wire parts.

8. An apparatus according to any one of the preceding claims, **characterized in that** the apparatus is further provided with displacing means for displacing a grid part, and optionally a duct to be connected with that grid part, in the direction of the apparatus.

9. An apparatus according to claim 9, **characterized in that** the displacing means comprise pickup means for displacing the grid part, and optionally a duct to be connected with that grid part, towards the apparatus.

10. An apparatus according to any one of claims 4-9, **characterized in that** the driving means are provided with a transmission, such that, in use, upon a driving stroke of the driving means, the feed mechanism and the bending means are operated.

11. An apparatus according to claim 6 and 10, **characterized in that** the transmission is such that upon a driving stroke of the driving means, also the cutter is operated.

12. An apparatus according to claim 8 and 10, **characterized in that** the transmission is such that upon a driving stroke of the driving means, also the displacing means are operated.

13. An apparatus according to any one of the preceding claims, **characterized in that** the driving means can be operated manually.

14. An apparatus according to any one of the preceding claims, **characterized in that** the driving means are made of mechanical design.

15. An apparatus according to any one of the preceding claims, **characterized in that** the apparatus is provided with a stock of wire parts.

16. An apparatus according to claim 15, **characterized in that** the apparatus is provided with a reel around which, in use, the stock of plastically deformable wire part has been stored so as to be unwindable.

17. An apparatus according to any one of the preceding claims, **characterized in that** the feed mechanism comprises at least one circumferential surface against which, at least during feeding, a wire part is situated, being clamped, and which, with the aid of the driving means, is movable in the circumferential direction of the circumferential surface.

18. An apparatus according to any one of the preceding claims, **characterized in that** the apparatus is provided with a housing with a recess in which, in use, the duct and the grid part can be received for the purpose of bending a wire part around the flexible tube and the grid part.

19. An apparatus according to any one of the preceding claims, **characterized in that** the apparatus is provided with a spring for causing the driving means to return to a rest condition after a driving stroke.

20. An apparatus according to claim 19, **characterized in that** the feed mechanism is provided with a freewheel clutch so that when the driving means are caused to return to the rest condition, wire parts which have been fed in the direction of the processing position with the aid of the last driving stroke retain an assumed position.

21. An apparatus according to any one of the preceding claims, **characterized in that** the apparatus is provided with at least one supporting part with the aid of which the apparatus can be supported against a nearby surface when the driving means are being driven.

22. An apparatus according to claim 21, **characterized in that** the at least one supporting part is designed such that, in use, near the supporting parts and between the nearby surface and the apparatus, a space is available for connecting the duct and the respective grid part with the aid of the apparatus.

23. An apparatus according to claim 21 or 22, **characterized in that** the at least one supporting part is designed to be adjustable, such that a distance between the apparatus and the nearby surface on which the apparatus rests in use, is adjustable.

24. An apparatus according to any one of claims 21-23, **characterized in that** the at least one supporting part is provided with a shock damper.

25. Use of an apparatus according to any one of the preceding claims for connecting a heating duct with a grid part for the purpose of installing a floor heating.
